# EUROPÄISCHE PATENTSCHRIFT

(11) **EP 0 494 322 B1**
(45) Veröffentlichungstag und Bekanntmachung des Hinweises auf die Patenterteilung: **03.05.1995**
(21) Anmeldenummer: 91100126.1
(22) Anmeldetag: 03.01.1991
(51) Int. Cl.: A01K 97/02

(54) **Wasserlöslicher Hüllkörper zum Einbringen von Fischlockmitteln in Angelgewässer**
Soluble container to bring fish attracting bait in fishwater
Récipient soluble pour amorcer le poisson au lieu de pêche

(43) Veröffentlichungstag der Anmeldung: 15.07.1992
(73) Patentinhaber: Fischer, Volkmar, D-04209 Leipzig (DE)
(72) Erfinder: Fischer, Volkmar, O-7060 Leipzig (DE)

(56) Entgegenhaltungen:
- DE-U- 9 013 119
- FR-A- 1 203 164
- FR-A- 1 266 093
- FR-A- 1 342 418
- FR-A- 1 595 552
- FR-A- 2 087 564
- FR-A- 2 275 145
- GB-A- 2 226 222

## Beschreibung

Bei dieser Erfindung handelt es sich um einen wasserlöslichen Hüllkörper zum Einbringen von Fischlockmittel in Angelgewässer. Diese Erfindung dient dem Anlocken von Fischen beim Angeln. Sie bietet dem Angler die Möglichkeit mit ein und demselben Lockmittel wahlweise auf dem Gewässergrund oder an der Wasseroberfläche gezielt Fische anzulocken.
Um die Fangergebnisse beim Angeln zu erhöhen, ist ein vom Gesetzgeber erlaubter Weg, die Fische im Angelgewässer mittels Lockmittel anzulocken. Jede Fischart muß jedoch gezielt mit bestimmten Mitteln, entweder an der Wasseroberfläche oder auf dem Gewässergrund angelockt werden. Mit den bisherigen Methoden ist es nur möglich, entweder speziell auf dem Gewässergrund oder speziell an der Wasseroberfläche zu locken.

Ziel der Erfindung ist, es dem Angler zu ermöglichen, nach Belieben oder Notwendigkeit auf dem Gewässergrund oder an der Wasseroberfläche anbieten zu können, ohne zwei spezielle Lockmittel mitführen und verwenden zu müssen.

Die Aufgabe der Erfindung ist, das Fischlockmittel durch eine wasserlösliche Umhüllung einzuschließen und mit dem, ebenfalls aus wasserlöslichem Material bestehenden Schwimmkörper an der Wasseroberfläche zu tragen. Wird der abtrennbare Schwimmkörper entfernt, kann dadurch die Umhüllung mit dem Lockmittel auf den Gewässergrund absinken. Dort wird das Lockmittel nach Auflösung der Umhüllung freigegeben.

Erfindungsgemäß wird die Aufgabe so gelöst, daß an dem Hüllkörper ein abtrennbarer, ebenfalls aus wasserlöslichem Material bestehender Schwimmkörper vorgesehen ist.
Daraus ergeben sich folgende Vorteile:
Der Angler kann diese Kombination variabel einsetzen, da die Umhüllung mit einem abtrennbaren Schwimmkörper versehen ist. Beläßt man den Schwimmkörper am Lockmittelteil, ist diese Kombination schwimmfähig.
Entfernt der Angler den Schwimmkörper, ist die Wasserlösliche Umhüllung mit dem Lockmittel versenkbar.
Eine Möglichkeit zum geschützten Einbringen von Angelködern oder Fischfutterin Gewässer und darüber hinaus zu einer bestimmten Zeit freizugeben, bietet das Patentdokument FR -A 2275145.
Hierbei werden wasserlösliche Tüten, die Fischfutter oder den Angelköder enthalten, an der Angelschnur oder Angelhaken befestigt und ins Gewässer eingeworfen.
Dort löst sich dieser auf.

Die in der Patentanmeldung GB - A - 2226222 beschriebene Erfindung ermöglicht das Anlocken der Fische mit pulverförmigen oder flüssigen Locksubstanzen durch den Einsatz einer wasserlöslichen Kapsel, die mit einem Gummiband an der Angelschnur befestigt wird.
Nach dem Einwerfen der Angelschnur löst sich die Kapsel auf und gibt die schon genannten Substanzen frei.

Die Erfindung dient dem gezielten Anbieten von Fischlockmittel mittels wasserlöslichen Umhüllungen und somit dem Anlocken von Fischen in Angelgewässern.
Bei dieser Erfindung wird eine wasserlösliche Umhüllung und ein, ebenfalls aus wasserlöslichem Material bestehender und zugleich auch abtrennbarer Schwimmkörper, wahlweise integriert. Soll das Lockmittel, welches sich in der Umhüllung befindet, auf dem Gewässergrund angeboten werden, wird der Schwimmkörper vor dem Einwerfen ins Wasser entfernt und die Kombination kann auf den Gewässergrund absinken und gibt dort das Lockmittel frei.
Um das Lockmittel an der Wasseroberfläche anbieten zu können, beläßt man den Schwimmkörper an der Umhüllung.
Der Schwimmkörper trägt nach dem Einwerfen die Umhüllung mit dem Lockmittel an der Wasseroberfläche und nach Auflösung der Umhüllung wird das Lockmittel an der Oberfläche freigesetzt.

## Patentansprüche

1. Wasserlöslicher Hüllkörper zum Einbringen von Fischlockmittel in Angelgewässer, dadurch gekennzeichnet, daß an dem Hüllkörper ein abtrennbarer, ebenfalls aus wasserlöslichem Material bestehender Schwimmkörper vorgesehen ist.

## Claims

1. A water-soluble cover for placing bait in fishing grounds that is characterized by a removable float, which is also water-soluble, being attached to the cover.

## Revendications

1. Corps enveloppant soluble dans l'eau pour jeter des appâts dans les eaux réservées à la pêche à la ligne caractérisé en ce qu'un flotteur amovible et également en matière soluble dans l'eau es prévu sur le corps enveloppant.
